(19) **Europäisches Patentamt / European Patent Office / Office européen des brevets**

(11) **EP 4 661 460 A1**

(12) # EUROPEAN PATENT APPLICATION
published in accordance with Art. 153(4) EPC

(43) Date of publication:
**10.12.2025 Bulletin 2025/50**

(21) Application number: **24750037.4**

(22) Date of filing: **23.01.2024**

(51) International Patent Classification (IPC):
**H04W 12/041** (2021.01)    **H04W 36/24** (2009.01)

(52) Cooperative Patent Classification (CPC):
**H04W 12/041; H04W 36/0069; H04W 36/24; H04W 36/362; H04W 74/0833; H04W 76/15; H04W 76/20**

(86) International application number:
**PCT/JP2024/001747**

(87) International publication number:
**WO 2024/162085 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.01.2023 JP 2023013372**

(71) Applicant: **DENSO CORPORATION**
**Kariya-city, Aichi 448-8661 (JP)**

(72) Inventor: **MAEMOTO, Daiki**
**Kariya-city, Aichi 4488661 (JP)**

(74) Representative: **TBK**
**Bavariaring 4-6**
**80336 München (DE)**

(54) **COMMUNICATION DEVICE AND COMMUNICATION METHOD**

(57)     A communication apparatus (100) according to an embodiment is a communication apparatus that performs communication with a master cell group associated with a master node (MN 200M) and a secondary cell group associated with a secondary node (SN 200S). The communication apparatus comprises a receiver (121) configured to receive configuration information from the master node, the configuration information being used to configure, in the communication apparatus, a plurality of conditional reconfigurations for configuring a plurality of candidate cells, and a controller (120) configured to perform a conditional reconfiguration for a cell fulfilling an execution condition among the plurality of candidate cells. The configuration information includes information of a counter value used to derive a security key of a secondary node associated with the cell. The controller updates the counter value when the conditional reconfiguration is performed.

FIG. 8

EP 4 661 460 A1

**Description**

Cross-Reference to Related Application

This application is based on and claims the benefit of priority from Japanese Patent Application No. 2023-013372, filed on January 31, 2023, the entire contents of which are incorporated herein by reference.

Technical Field

The present disclosure relates to a communication apparatus and a communication method.

Background Art

In a mobile communication system conforming to the technical specification of the Third Generation Partnership Project (hereinafter, 3GPP (registered trademark)) which is a mobile communication system standardization project, dual connectivity (DC) is introduced. In the DC, a communication apparatus performs communication with a master cell group (MCG) associated with a master node (also referred to as a "master base station") and a secondary cell group (SCG) associated with a secondary node (also referred to as a "secondary base station").

In the 3GPP technical specification, the master node transmits a security key (specifically, KSN) to the secondary node, and transmits a counter value (specifically, an SN counter) used to derive the security key to the communication apparatus. The communication apparatus derives the security key by using the counter value, and derives a key used for protecting communication with the secondary node by using the derived security key (see Non Patent Literature 1).

In recent years, for example, selective SCG activation has been discussed so that a cell can be continuously changed when a communication apparatus moves at a high speed. In the selective SCG activation, a plurality of conditional reconfigurations is configured for the communication apparatus to configure a plurality of candidate target primary secondary cells (candidate target PS cells) while the communication apparatus remains connected to a same primary cell (P cell). The communication apparatus changes the PS cell from a source PS cell to a candidate target PS cell by performing a conditional reconfiguration on a candidate target PS cell fulfilling an execution condition among the plurality of conditional reconfigurations. Even after the change of the PS cell, the communication apparatus can continuously change the cell by changing the PS cell by using the plurality of held conditional reconfigurations.

Citation List

Non Patent Literature

Non Patent Literature 1: 3GPP TS 33.501 V17.8.0 "Security architecture and procedures for 5G System"

Summary of Invention

A communication apparatus according to a first aspect is a communication apparatus that performs communication with a master cell group associated with a master node (MN 200M) and a secondary cell group associated with a secondary node (SN 200S). The communication apparatus comprises a receiver (121) configured to receive configuration information from the master node, the configuration information being used to configure, in the communication apparatus, a plurality of conditional reconfigurations for configuring a plurality of candidate cells, and a controller (120) configured to perform a conditional reconfiguration for a cell fulfilling an execution condition among the plurality of candidate cells. The configuration information includes information of a counter value used to derive a security key of a secondary node associated with the cell. The controller updates the counter value when the conditional reconfiguration is performed.

A communication method according to a second aspect is a communication method performed in a communication apparatus (100) that performs communication with a master cell group associated with a master node (MN 200M) and a secondary cell group associated with a secondary node (SN 200S). The communication method comprises the steps of receiving configuration information from the master node, the configuration information being used to configure, in the communication apparatus, a plurality of conditional reconfigurations for configuring a plurality of candidate cells, and performing a conditional reconfiguration for a cell fulfilling an execution condition among the plurality of candidate cells. The configuration information includes information of a counter value used to derive a security key of a target secondary node associated with the cell. The communication method further comprises a step of updating the counter value when the conditional reconfiguration is performed.

Brief Description of Drawings

Objects, features, advantages, and the like of the present disclosure will become more apparent from the following detailed description with reference to the accompanying drawings.

Fig. 1 is a diagram illustrating a configuration of a mobile communication system according to an embodiment.
Fig. 2 is a diagram illustrating a configuration example of a protocol stack in the mobile communication system according to the embodiment.
Fig. 3 is a diagram illustrating an overview of dual connectivity (DC) according to the embodiment.
Fig. 4 is a sequence diagram for describing an example of security in the DC.
Fig. 5 is a diagram for describing an assumed scenario.
Fig. 6 is a diagram illustrating a configuration of a user equipment (UE) according to the embodiment.
Fig. 7 is a diagram illustrating a configuration of a base station according to an embodiment.
Fig. 8 is a sequence diagram (part 1) illustrating a first operation example according to the embodiment.
Fig. 9 is a sequence diagram (part 2) illustrating the first operation example according to the embodiment.
Fig. 10 is a sequence diagram (part 3) illustrating the first operation example according to the embodiment.
Fig. 11 is a diagram illustrating a configuration example of an RRC Reconfiguration message according to the embodiment.
Fig. 12 is a sequence diagram for describing a second operation example according to the embodiment.
Fig. 13 is a sequence diagram for describing a third operation example according to the embodiment.

Description of Embodiments

A mobile communication system according to an embodiment will be described with reference to the drawings. In the description of the drawings, the same or similar parts are denoted by the same or similar reference numerals.
In order to make a cell continuously changeable, a communication apparatus uses a plurality of conditional reconfigurations without resetting even after a change of a PS cell, and thus, it is assumed that a latest counter value cannot be received from a master node every time the PS cell is changed.
In this case, for example, the communication apparatus needs to derive a security key by using a same counter value every time the PS cell is changed to a same cell. As a result, there is a concern that a key used for communication protection between the communication apparatus and a secondary node is the same as a previously used key, and communication between the communication apparatus and the secondary node is not appropriately protected.
Therefore, an object of the present invention is to provide a communication apparatus and a communication method capable of appropriately protecting communication between a communication apparatus and a secondary node.

(Configuration of Mobile Communication System)

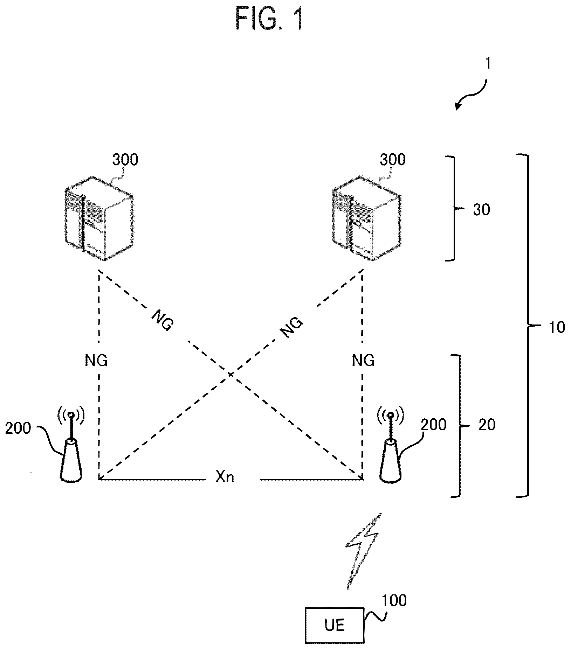

A configuration of a mobile communication system 1 according to an embodiment will be described with reference to Fig. 1. The mobile communication system 1 is, for example, a system conforming to the 3GPP technical specification (TS). Hereinafter, as the mobile communication system 1, a description will be given, as an example, as to the 5th generation system (5GS) of the 3GPP standard, that is, a mobile communication system based on New Radio (NR).
The mobile communication system 1 includes a network 10 and a user equipment (UE) 100 that communicates with the network 10. The network 10 includes a next generation radio access network (NG-RAN) 20, which is a 5G radio access network, and a 5G core network (5GC) 30, which is a 5G core network.
The UE 100 is an example of a communication apparatus. The UE 100 may be an apparatus used by a user. The UE 100 may be a user equipment specified in the 3GPP technical specification. The UE 100 is, for example, a mobile apparatus such as a mobile phone terminal such as a smartphone, a tablet terminal, a laptop personal computer (PC), a communication module, or a communication card. The UE 100 may be a vehicle (for example, a car, a train, or the like) or an apparatus (for example, a vehicle UE) provided in the vehicle. The UE 100 may be a transport body other than the vehicle (for example, a ship, an airplane, or the like) or an apparatus (for example, an aerial UE) provided in the transport body. The UE 100 may be a sensor or an apparatus provided in the sensor. Note that the UE 100 may be referred to as another name such as a mobile station, a mobile terminal, a mobile apparatus, a mobile unit, a subscriber station, a subscriber terminal, a subscriber apparatus, a subscriber unit, a wireless station, a wireless terminal, a wireless apparatus, a wireless unit, a remote station, a remote terminal, a remote apparatus, or a remote unit. In addition, the UE 100 is an example of a terminal, and the terminal may include a factory device or the like.
The NG-RAN 20 includes a plurality of base stations 200. Each of the base stations 200 manages at least one cell. A cell forms a minimum unit of a communication area. For example, one cell belongs to one frequency (a carrier frequency) and is formed by one component carrier. The term "cell" may represent a radio communication resource, and may also represent a communication target of the UE 100. Each base station 200 can perform radio communication with the UE 100 existing in the cell of each base station 200. The base station 200 communicates with the UE 100 by using a protocol stack of a RAN. The base station 200 is connected to another base station 200 (which may also be referred to as a neighboring base station) via an Xn interface. The base station 200 communicates with the neighboring base station via the Xn interface. In addition, the base station 200 provides NR user plane and control plane protocol terminations towards the UE 100 and is connected to the 5GC 30 via an NG interface. Such a base station 200 of NR may be referred to as a gNodeB (gNB).

The 5GC 30 includes a core network apparatus 300. The core network apparatus 300 includes, for example, an access and mobility management function (AMF) and/or a user plane function (UPF). The AMF performs mobility management of the UE 100. The UPF provides a feature specialized for user plane processing. The AMF and the UPF are connected to the base station 200 via the NG interface.

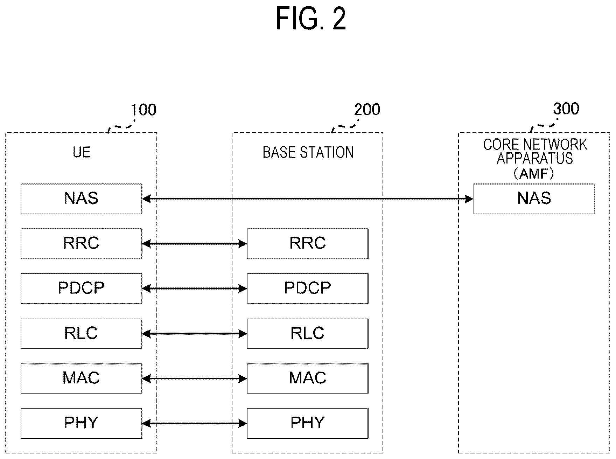

A configuration example of a protocol stack in the mobile communication system 1 according to the embodiment will be described with reference to Fig. 2.

A protocol of a radio section between the UE 100 and the base station 200 includes a physical (PHY) layer, a medium access control (MAC) layer, a radio link control (RLC) layer, a packet data convergence protocol (PDCP) layer, and a radio resource control (RRC) layer.

The PHY layer performs encoding and decoding, modulation and demodulation, antenna mapping and demapping, and resource mapping and demapping. Data and control information are transmitted between the PHY layer of the UE 100 and the PHY layer of the base station 200 via a physical channel.

The physical channel includes a plurality of orthogonal frequency division multiplexing (OFDM) symbols in the time domain and a plurality of subcarriers in the frequency domain. One subframe includes a plurality of OFDM symbols in the time domain. A resource block is a resource allocation unit, and includes a plurality of OFDM symbols and a plurality of subcarriers. A frame can be composed of 10 ms, and can include 10 subframes composed of 1 ms. A number of slots corresponding to a subcarrier spacing may be included in the subframe.

Among the physical channels, a physical downlink control channel (PDCCH) plays a central role for purposes such as, for example, downlink scheduling allocation, uplink scheduling grant, and transmission power control. For example, the UE 100 performs blind decoding of the PDCCH using a cell-radio network temporary identifier (C-RNTI) and a modulation and coding scheme-C-RNTI (MCS-C-RNTI) or a configured scheduling-RNTI (CS-RNTI) allocated from the base station 200 to the UE 100, and acquires a DCI which has been successfully decoded as a DCI addressed to its own UE. Here, a CRC parity bit scrambled by the C-RNTI and the MCS-C-RNTI or the CS-RNTI is added to the DCI transmitted from the base station 200.

In the NR, the UE 100 can use a bandwidth narrower than a system bandwidth (that is, the bandwidth of the cell). The base station 200 configures a bandwidth part (BWP) of consecutive PRBs in the UE 100. The UE 100 transmits and receives data and a control signal in an active BWP. In the UE 100, for example, a maximum of four BWPs can be configured. The BWPs may have different subcarrier spacings or may have frequencies overlapping each other. In a case in which a plurality of BWPs is configured for the UE 100, the base station 200 can designate which BWP is to be activated by control in downlink. As a result, the base station 200 can dynamically adjust a UE bandwidth according to the amount of data traffic of the UE 100 and the like, and can reduce the UE power consumption.

The base station 200 can, for example, configure a maximum of three control resource sets (CORESET) for each of a maximum of four BWPs on a serving cell. The CORESET is a radio resource for control information to be received by the UE 100. A maximum of 12 CORESETs may be configured on the serving cell in the UE 100. Each CORESET has indices 0 to 11. For example, the CORESET includes six resource blocks (PRB) and one, two, or three consecutive OFDM symbols in the time domain.

The MAC layer performs data priority control, retransmission processing by hybrid ARQ (HARQ), a random access procedure, and the like. Data and control information are transmitted between the MAC layer of the UE 100 and the MAC layer of the base station 200 via a transport channel. The MAC layer of the base station 200 includes a scheduler. The scheduler determines uplink and downlink transport formats (transport block size and modulation and coding scheme (MCS)) and resources to be allocated to the UE 100.

The RLC layer transmits data to the RLC layer on a reception side by using the features of the MAC layer and the PHY layer. Data and control information are transmitted between the RLC layer of the UE 100 and the RLC layer of the base station 200 via a logical channel.

The PDCP layer performs header compression and decompression and encryption and decryption.

A service data adaptation protocol (SDAP) layer may be provided as an upper layer of the PDCP layer. The service data adaptation protocol (SDAP) layer performs mapping between an IP flow that is a unit in which a core network performs quality of service (QoS) control, and a radio bearer that is a unit in which an access stratum (AS) performs QoS control.

The RRC layer controls the logical channel, the transport channel, and the physical channel in response to establishment, reestablishment, and release of the radio bearer. RRC signaling for various configurations is transmitted between the RRC layer of the UE 100 and the RRC layer of the base station 200. In a case where there is an RRC connection between the RRC of the UE 100 and the RRC of the base station 200, the UE 100 is in an RRC connected state. In a case where there is no RRC connection between the RRC of the UE 100 and the RRC of the base station 200, the UE 100 is in an RRC idle state. In a case in which an RRC connection between the RRC of the UE 100 and the RRC of the base station 200 is suspended, the UE 100 is in an RRC inactive state.

A NAS layer located above the RRC layer performs session management and mobility management of the UE 100. NAS signaling is transmitted between the NAS layer of the UE 100 and the NAS layer of the core network apparatus 300 (AMF). Note that the UE 100 has an application layer and the like in addition to a protocol of a radio interface.

(Overview of DC)

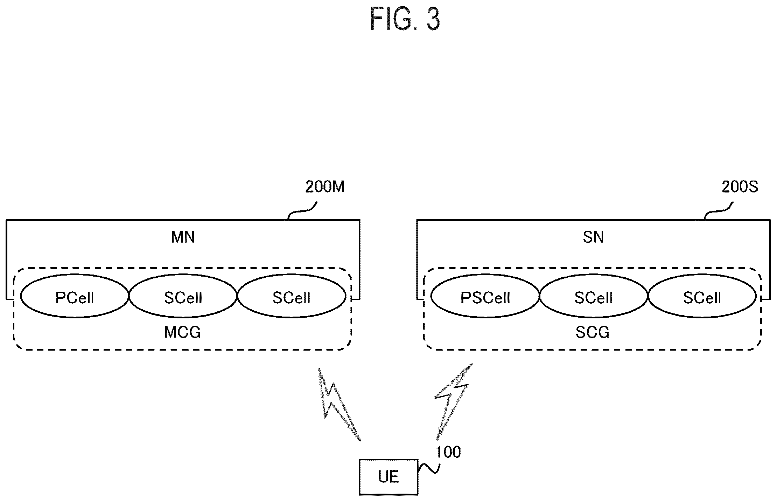

An overview of dual connectivity (DC) according to the embodiment will be described with reference to Fig. 3.

In the DC, the UE 100 performs simultaneous communication with a master cell group (MCG) managed by a master node (MN) 200M and a secondary cell group (SCG) managed by a secondary node (SN) 200S. The MN 200M may be an NR base station (gNB) or an LTE base station (eNB). The MN 200M is also referred to as a master base station. Note that the master node is a radio access node that provides a control plane connection to the core network in multi-radio dual connectivity (MR-DC). The master node may be a Master eNB (in E-UTRA-NR Dual Connectivity (EN-DC)), a Master ng-eNB (in NG-RAN E-UTRA-NR Dual Connectivity (NGEN-DC)), or a Master gNB (in NR-NR Dual Connectivity (NR-DC) and NR-E-UTRA Dual Connectivity (NE-DC)).

The SN 200S may be an NR base station (gNB) or an LTE base station (eNB). The SN 200S is also referred to as a secondary base station. In the MR-DC, the secondary node is a radio access node that does not have a control plane connection to the core network and provides additional resources to the UE 100. The secondary node may be an en-gNB (in EN-DC), a Secondary ng-eNB (in NE-DC), or a Secondary gNB (in NR-DC and NGEN-DC).

For example, the MN 200M transmits a designated message (for example, an SN addition request message) to the SN 200S, and the MN 200M transmits an RRC reconfiguration message to the UE 100, so that the DC is initiated.

The UE 100 in the RRC connected state is allocated radio resources from schedulers of the MN 200M and the SN 200S connected to each other via a network communicator of the backhaul, and performs radio communication by using the radio resources of the MN 200M and the radio resources of the SN 200S. The network communicator between the MN 200M and the SN 200 may be an Xn interface or an X2 interface. The MN 200M and the SN 200 communicate with each other via the network communicator.

The MN 200M may have a control plane connection with the core network. The MN 200M provides main radio resources of the UE 100. The MN 200M manages the MCG. The MCG is a group of serving cells associated with the MN 200M. The MCG includes a primary cell (PCell), and optionally includes one or more secondary cells (SCells).

The SN 200S may not have a control plane connection with the core network. The SN 200S provides additional radio resources to the UE 100. The SN 200S manages the SCG. The SCG is associated with the SN 200S. The SCG includes a primary secondary cell (PS cell), and optionally includes one or more SCells. Note that the PCell of the MCG and the PS cell of the SCG are also referred to as special cells (SpCells).

(Security in DC)

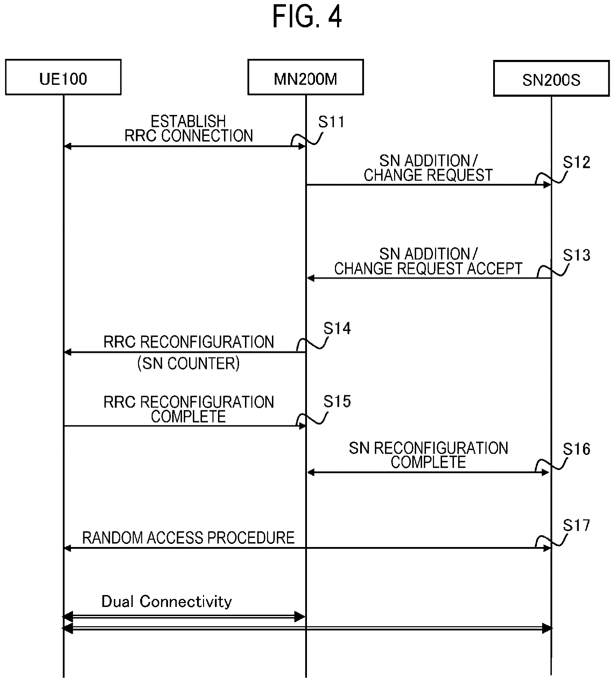

An example of security in the DC will be described with reference to Fig. 4.

In step S11, the UE 100 and the MN 200M establish an RRC connection.

In step S12, the MN 200M transmits an SN addition request message or an SN change request message to the SN 200S. The message may include a security key (KSN) of a target secondary node (specifically, SN 200S). The security key may be referred to as a secondary key. The security key may be expressed as "KeNB", "KgNB", "S-KeNB", "S-KgNB", or "S-KeNB" in addition to "KSN".

The MN 200M may calculate the security key and deliver the security key to the SN 200S. The SN 200S derives a key used for communication protection between the UE 100 and the SN 200S based on the security key. The SN 200S can derive, for example, an RRC key and a UP key used between the UE 100 and the SN 200S as the key.

The RRC key is a key for RRC signaling. The RRC key is a key derived by the UE 100 and the base station 200 from the security key. The RRC key may have a key (KRRCint) used only for protecting the RRC signaling together with a specific integrity algorithm, and a key (KRRCenc) used only for protecting the RRC signaling together with a specific encryption algorithm.

The UP key is a key for uplink (UP) traffic. The UP key is a key derived by the UE 100 and the base station 200 from the security key. The UP key may have a key (KRRCint) used only for protecting the UP traffic between the UE 100 and the base station 200 together with a specific integrity algorithm (particular integrity algorithm), and a key (KRRCenc) used only for protecting the UP traffic together with a specific encryption algorithm (particular encryption algorithm).

Note that the MN 200M can transmit a UE security feature and a UP security policy received from a session management function (SMF) to the SN 200S. In addition, the MN 200M may include information indicating determination of UP integrity protection and encryption activation in the message.

The SN 200S can allocate necessary resources. In addition, the SN 200S can select the encryption algorithm and the integrity algorithm that have a highest priority and also exist in the UE security feature from a configuration list. In addition, the SN 200S can activate the UP security policy.

In step S13, the SN 200S transmits an SN addition request accept message or an SN change request message to the MN 200M. The message may indicate the availability of the requested resource and an identifier of the algorithm selected for a Data Radio Bearer (DRB) and/or a Signalling Radio Bearer (SRB) requested for the UE 100.

In step S14, the MN 200M transmits an RRC reconfiguration message to the UE 100 to instruct the UE 100 to configure a new DRB and/or SRB for the SN 200S.

The MN 200M may include an SN counter in the RRC reconfiguration message. The SN counter indicates a counter value used to derive a security key. The SN counter may be a parameter indicating that a new KSN is required.

In addition, the MN 200M may include these pieces of information in the RRC reconfiguration message, for example, in order to transfer a UE configuration parameter including the algorithm identifier received from the SN 200S, UP integrity protection, and encryption instruction.

After verifying the integrity, the UE 100 accepts the RRC reconfiguration message. When the SN counter is included in the message, the UE 100 derives (calculates) a security key of the SN 200S based on the counter value indicated by the SN counter. In addition, the UE 100 derives (calculates) a necessary RRC key and a necessary UP key based on the derived security key. The UE 100 activates RRC and UP protection according to the received instruction for each of the associated SRB and/or DRB.

In step S15, the UE 100 transmits an RRC reconfiguration complete message to the MN 200M. At this point, the UE 100 activates the selected encryption/decryption and integrity protection key with the SN 200S.

In step S16, the MN 200M transmits an SN reconfiguration complete message to the SN 200S in order to notify the SN 200S of the configuration result. The SN 200S can activate the selected encryption/decryption and integrity protection with the UE 100 in response to the reception of the message. In a case where the encryption/decryption and integrity protection are not activated at this stage, the SN 200S activates the encryption/decryption and integrity protection in response to reception of a random access request from the UE 100.

In step S 17, the UE 100 and the SN 200S perform a random access procedure. As a result, the UE 100 communicates with the MCG managed by the MN 200M and the SCG managed by the SN 200S in the DC. As described above, the SN 200S can apply the security key to derive the RRC key and the UP key, enable encryption and decryption for the UE 100, and perform communication with the UE 100.

(Assumed Scenario)

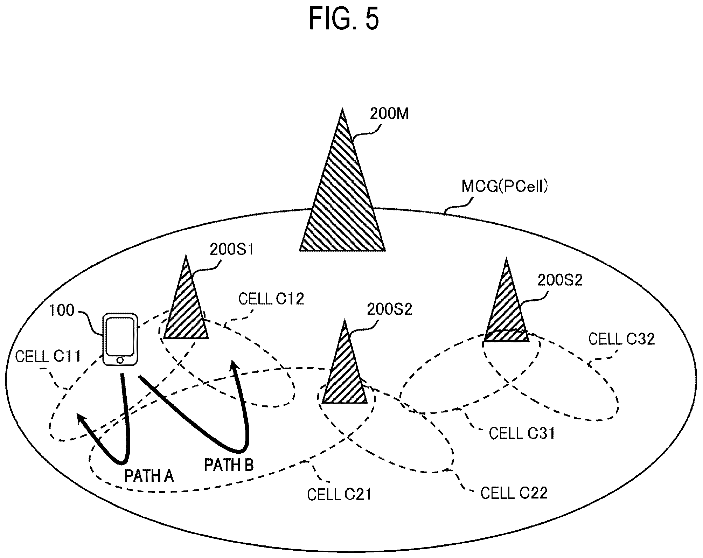

An assumed scenario will be described with reference to Fig. 5. In recent years, for example, selective SCG activation has been discussed so that a cell can be continuously changed when the UE 100 moves at a high speed. In the selective SCG activation, a plurality of conditional reconfigurations is configured for the UE 100 to configure a plurality of candidate target primary secondary cells (candidate target PS cells) while the UE 100 remains connected to a same P cell. The UE 100 changes a PS cell from a source PS cell to a candidate target PS cell by performing a conditional reconfiguration on a candidate target PS cell fulfilling an execution condition among the plurality of conditional reconfigurations. Even after the change of the PS cell, the UE 100 can continuously change the cell by changing the PS cell by using the plurality of held conditional reconfigurations.

Here, in order to make the cell continuously changeable, the UE 100 uses a plurality of conditional reconfigurations without resetting even after a change of a PS cell, and thus, it is assumed that a latest counter value (specifically, the SN counter) cannot be received from the MN 200M every time the PS cell is changed.

In this case, for example, the UE 100 needs to derive a security key by using a same counter value every time the PS cell is changed to a same cell. As a result, there is a concern that a key used for communication protection between the UE 100 and the SN 200S is the same as a previously used key, and communication between the UE 100 and the SN 200S is not appropriately protected.

For example, as illustrated in Fig. 5, the MN 200M manages the MCG (P cell). An SN 200S1 manages a cell C11 and a cell C12. An SN 200S2 manages a cell C21 and a cell C22. An SN 200S3 manages a cell C31 and a cell C32.

The UE 100 communicates with the MCG of the MN 200M and the cell C11 which is the SCG of the SN 200S1, by the DC. A case is assumed in which the conditional reconfiguration for each of the cell C11, the cell C12, the cell C21, the cell C22, the cell C31, and the cell C32 is configured in the UE 100 as a plurality of conditional reconfigurations.

As illustrated in a path A of Fig. 5, in a case where the UE 100 changes the PS cell from the cell C11 to the cell C21 by using a plurality of preset conditional reconfigurations and then changes the PS cell from the cell C21 to the cell C11, it is possible to change the PS cell without receiving the RRC reconfiguration message from the MN 200M as in step S14 of Fig. 4. Therefore, when changing the PS cell from the cell C21 to the cell C11, the UE 100 derives a security key by using a counter value used before changing the PS cell to the cell C21 as it is. As a result, even in a case where a plurality of PS cells is changed, the UE 100 achieves communication protection by using the same security key when the cell C11 is the PS cell.

In addition, since the SN 200S1 associated with the cell C11 and the cell C12 is the same, as illustrated in a path B in Fig. 5, in a case where the UE 100 changes the PS cell from the cell C11 to the cell C21 and then changes the PS cell from the cell C21 to the cell C12 by using a plurality of preset conditional reconfigurations, the counter value is currently the same in the configuration of the cell C11 and the configuration of the cell C12. Therefore, similarly to the path A, even in a case where a plurality of PS cells is changed, the UE 100 achieves communication protection by using the same security key when the cell C11 and the cell C12 are the PS cells.

Conventionally, every time the PS cell is changed, the security key is changed for safety. However, in the selective SCG activation, when the PS cell is changed to a specific cell, communication protection is achieved by using the same security key, and there is a concern that communication between the UE 100 and the SN 200S is not appropriately protected. In an embodiment to be described later, an operation for enabling appropriate protection of communication between the UE 100 and the SN 200S will be described.

(Configuration of User Equipment)

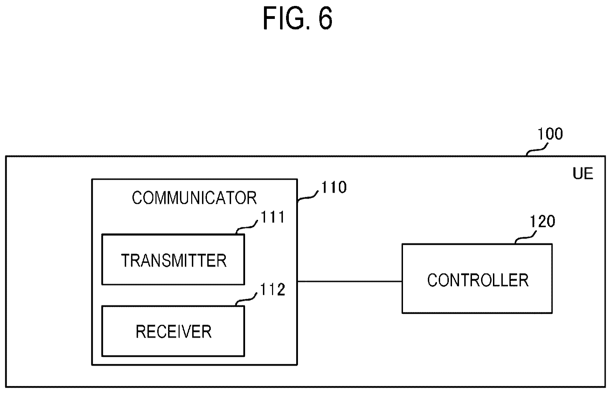

A configuration of the UE 100 according to the embodiment will be described with reference to Fig. 6. The UE 100 includes a communicator 110 and a controller 120.

The communicator 110 performs radio communication with the base station 200 by transmitting and receiving a radio signal to and from the base station 200. The communicator 110 includes at least one transmitter 111 and at least one receiver 112. The transmitter 111 and the receiver 112 may include a plurality of antennas and RF circuits. The antenna converts a signal into a radio wave and emits the radio wave into a space. Further, the antenna receives a radio wave in a space and converts the radio wave into a signal. The RF circuit performs analog processing of a signal transmitted and received via the antenna. The RF circuit may include a high frequency filter, an amplifier, a modulator, a low pass filter, and the like.

The controller 120 performs various types of control in the UE 100. The controller 120 controls communication with the base station 200 via the communicator 110. The operation of the UE 100 described above and described below may be an operation under the control of the controller 120. The controller 120 may include at least one processor capable of executing a program and a memory that stores the program. The processor may execute the program to perform the operation of the controller 120. The controller 120 may include a digital signal processor that performs digital processing of a signal transmitted and received via the antenna and the RF circuit. The digital processing includes processing of the protocol stack of the RAN. Note that the memory stores a program to be executed by the processor, parameters related to the program, and data related to the program. The memory may include at least one of a read only memory (ROM), an erasable programmable read only memory (EPROM), an electrically erasable programmable read only memory (EEPROM), a random access memory (RAM), and a flash memory. All or part of the memory may be included in the processor.

The UE 100 configured in this manner communicates with the MCG associated with the MN 200M and the SCG associated with the SN 200S. The receiver 112 receives, from the MN 200M, configuration information used to configure, in the UE 100, a plurality of conditional reconfigurations for configuring a plurality of candidate target primary secondary (PS) cells. The controller 120 performs a conditional reconfiguration on a cell fulfilling an execution condition among the plurality of candidate target PS cells. The configuration information includes information of a counter value used to derive a security key of a target SN 200S associated with the cell. The controller 120 updates the counter value when the conditional reconfiguration is performed. As a result, even in a case where the PS cell is changed to a specific cell, communication between the UE 100 and the SN 200S can be appropriately protected since communication protection is achieved by using a different security key.

In addition, the receiver 112 receives, from the MN 200M, the configuration information used to configure, in the UE 100, the plurality of conditional reconfigurations for configuring the plurality of candidate target primary secondary (PS) cells. The controller 120 updates the counter value used to derive the security key of the target SN 200S associated with the cell fulfilling the execution condition from among the plurality of candidate target PS cells. The transmitter 111 transmits, to the network 10, specific information for specifying the security key derived based on the updated counter value. As a result, the network 10 can grasp the security key derived based on the counter value updated by the UE 100, and the communication between the UE 100 and the SN 200S can be appropriately protected.

(Configuration of Base Station)

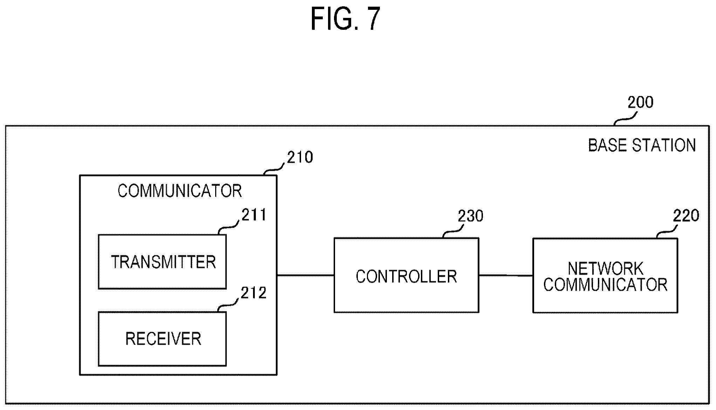

A configuration of the base station 200 according to the embodiment will be described with reference to Fig. 7. The base station 200 includes a communicator 210, a network communicator 220, and a controller 230.

For example, the communicator 210 receives a radio signal from the UE 100 and transmits a radio signal to the UE 100. The communicator 210 includes at least one transmitter 211 and at least one receiver 212. The transmitter 211 and the receiver 212 may include an RF circuit. The RF circuit performs analog processing of a signal transmitted and received via the antenna. The RF circuit may include a high frequency filter, an amplifier, a modulator, a low pass filter, and the like.

The network communicator 220 transmits and receives a signal to and from the network. The network communicator 220 receives a signal from a neighboring base station connected via the Xn interface which is an interface between base stations, for example, and transmits a signal to the neighboring base station. Further, the network communicator 220 receives a signal from the core network apparatus 300 connected via the NG interface, for example, and transmits a signal to the core network apparatus 300.

The controller 230 performs various types of control in the base station 200. The controller 230 controls, for example, communication with the UE 100 via the communicator 210. Further, the controller 230 controls, for example, communication with a node (for example, the neighboring base station or the core network apparatus 300) via the network communicator 220. The operation of the base station 200 described above and described below may be an operation under the control of the controller 230. The controller 230 may include at least one processor capable of executing a program and a memory that stores the program. The processor may execute the program to perform the operation of the controller 230. The controller 230 may include a digital signal processor that performs digital processing of a signal transmitted and received via the antenna and the RF circuit. The digital processing includes processing of the protocol stack of the RAN. Note that the memory stores a program to be executed by the processor, parameters related to the program, and data related to the program. All or part of the memory may be included in the processor.

The base station 200 configured in this manner operates as the MN 200M in the network 10 including the MN 200M associated with the MCG configured in the UE 100 and the SN 200S associated with the SCG configured in the UE 100. In the base station 200, the transmitter 211 transmits, to the UE 100, configuration information used to configure, in the communication apparatus, a plurality of conditional reconfigurations for configuring a plurality of candidate target primary secondary (PS) cells. The receiver 212 receives, from the UE 100 that has updated the counter value used to derive a security key of a target secondary node associated with the cell fulfilling the execution condition from among the plurality of candidate target PS cells, the specific information for specifying the security key derived based on the updated counter value.

In addition, the base station 200 operates as the SN 200S in the network 10 including the MN 200M associated with the MCG configured in the UE 100 and the SN 200S associated with the SCG configured in the UE 100. In the base station 200, the receiver 212 receives, from the UE 100 that has updated the counter value used to derive the security key of the target secondary node associated with the cell fulfilling the execution condition from among the plurality of candidate target PS cells via the master node that transmits, to the UE 100, the configuration information used to configure, in the communication apparatus, the plurality of conditional reconfigurations for configuring the plurality of candidate target primary secondary (PS) cells, the specific information for specifying the security key derived based on the updated counter value.

As a result, the MN 200M or the SN 200S that has received the specific information from the MN 200M can grasp the security key derived based on the counter value updated by the UE 100, so that the communication between the UE 100 and the SN 200S can be appropriately protected.

(Operation Examples of Mobile Communication System)

Hereinafter, operation examples of the mobile communication system will be described. Note that description of the same contents as those already described may be omitted.

(First Operation Example)

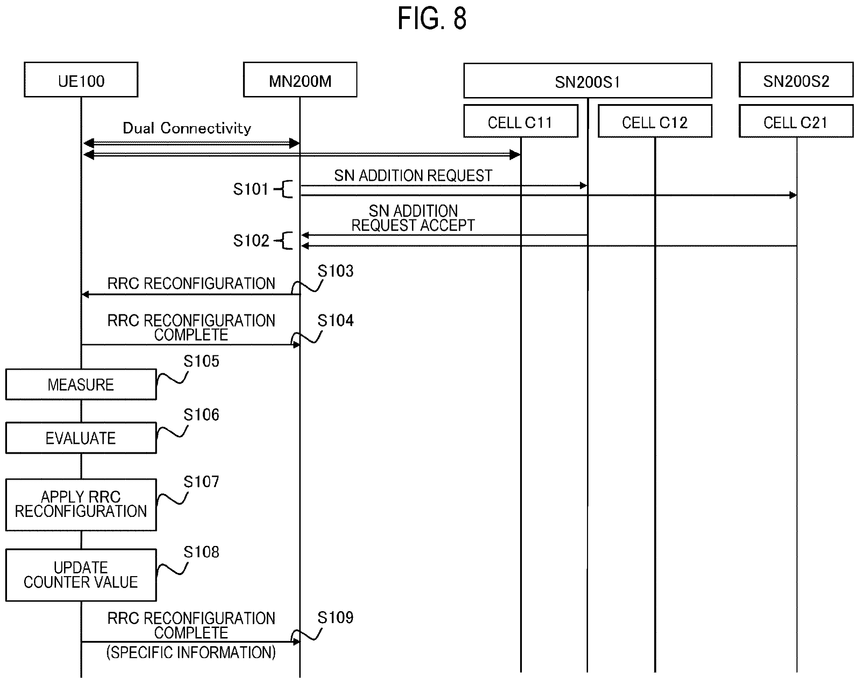

A first operation example of the mobile communication system 1 according to the embodiment will be described with reference to Figs. 4 to 11. As illustrated in Figs. 5 and 8, it is assumed that DC by the UE 100, the MN 200M, and the SN 200S1 is configured. In the initial stage of Fig. 8, the UE 100 communicates with the MCG (P cell) of the MN 200M and the SCG of the SN 200S1. The cell C11 of the SN 200S1 is a PS cell. Hereinafter, communication between the UE 100 and the MCG (P cell) will be appropriately described as communication between the UE 100 and the MN 200M. Similarly, communication between the UE 100 and each SCG (PS cell) will be appropriately described as communication between the UE 100 and each SN 200S. Note that, in Fig. 8, the SN 200S3 is omitted.

In the present operation example, a case where the UE 100 moves as in the path B in Fig. 5 will be described as an example.

As illustrated in Fig. 8, in step S101, the controller 230 of the MN 200M initiates conditional SN change by requesting a candidate target SN to allocate a resource to the UE by an SN addition procedure. Specifically, the network (NW) communicator 220 of the MN 200M transmits an SN addition request message to each candidate target SN. In the present operation example, the candidate targets SN are the SN 200S1, the SN 200S2, and the SN 200S3. The NW communicator 220 of the SNs 200S1 to 200S3 receives the SN addition request message. Note that the request may indicate that it is for the Conditional PSCell Addition/Change (CPAC).

The NW communicator 220 of the MN 200M can provide a candidate cell recommended by the MN 200M based on a latest measurement result so that the candidate target SN selects and configures the SCG cell. The NW communicator 220 of the MN 200M may be able to provide an upper limit number of the PS cells that the candidate target SN can prepare.

The controller 230 of each candidate target SN determines a list of PS cells from the list of cells indicated in the measurement result. In addition, the controller 230 of each candidate target SN determines an S cell of another SCG.

In addition, the MN 200M and each SN 200S may be able to perform the same operation as step S12.

In step S102, the NW communicator 220 of each candidate target SN transmits an SN addition request accept message to the MN 200M. The NW communicator 220 of the MN 200M receives the SN addition request accept message from each candidate target SN.

The controller 230 of each candidate target SN may include an RRC reconfiguration message including new SCG radio resource configuration in the SN addition request accept message. Note that the MN 200M and each SN 200S may also be able to perform the same operation as step S13.

In step S103, the transmitter 211 of the MN 200M transmits the RRC reconfiguration (RRCReconfiguration) message to the UE 100. The receiver 112 of the UE 100 receives the RRC reconfiguration message from the MN 200M.

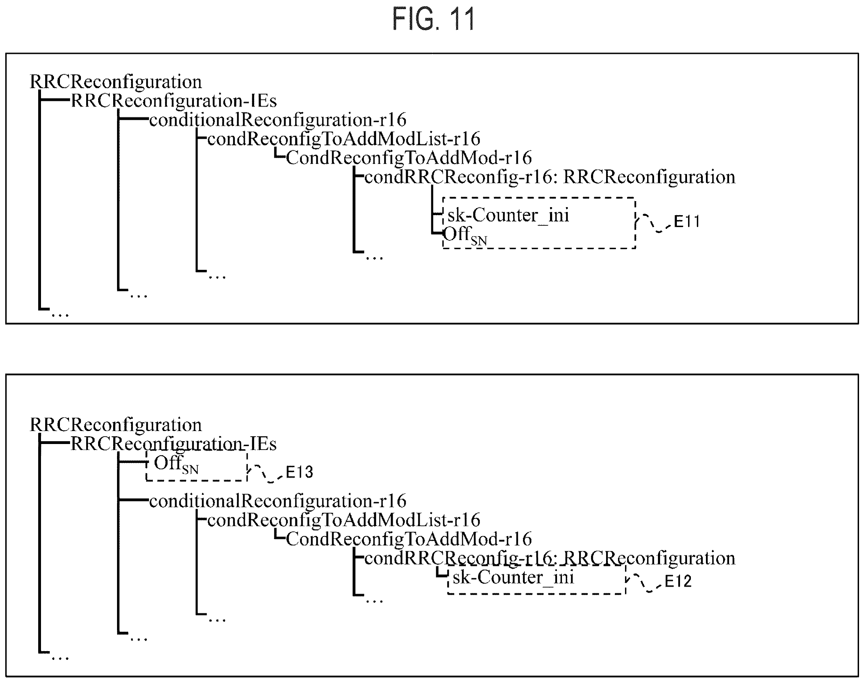

The RRC reconfiguration message includes configuration information used to configure, in the UE 100, a plurality of conditional reconfigurations. The plurality of conditional reconfigurations is for configuring a plurality of candidate target PS cells. The configuration information may be information of CPC configuration. As illustrated in Fig. 11, the configuration information may be, for example, "RRCReconfiguration-IEs" or "conditionalReconfiguration". The configuration information includes one or more pieces of conditional reconfiguration information (for example, condRRCReconfig). Each conditional reconfiguration information (condRRCReconfig) includes an RRC reconfiguration (RRCReconfiguration) message to be applied when an execution condition is fulfilled. The configuration information may be a list of RRC reconfiguration messages associated with the execution condition.

The RRC reconfiguration message included in the conditional reconfiguration information includes configuration information for configuring a candidate target PS cell. The RRC reconfiguration message does not include a designated field (for example, a field of "conditionalReconfiguration" or a field of "daps-Config"). The RRC reconfiguration message includes information of a counter value for deriving a security key of a target SN.

The information of the counter value may include an SN counter indicating the counter value. The SN counter may be referred to as "sk-Counter". The SN counter may be a counter used for initial configuration and refreshing of the security key of the target SN.

The information of the counter value may include an initial counter value and an offset value. The initial counter value and the offset value are used for updating the counter value. The receiver 112 of the UE 100 receives the initial counter value and the offset value as the information of the counter value from the MN 200M.

As illustrated in E11 of Fig. 11, an initial counter value (sk-Counter_ini) and an offset value (OffSN) may be included in conditional reconfiguration information (condRRCReconfig). In this case, the offset value may be a value configured dedicatedly in each of the plurality of pieces of conditional reconfiguration information. Alternatively, as illustrated in E12 of Fig. 11, the initial counter value (sk-Counter_ini) may be included in the conditional reconfiguration information. As illustrated in E13 of Fig. 11, the offset value (OffSN) may include RRCReconfiguration separately from conditionalReconfiguration. In this case, the offset value may be a value commonly configured in the plurality of pieces of conditional reconfiguration information.

Furthermore, the information of the counter value may include a list in which each of the plurality of counter values and a number of changes of the PS cell are associated with each other. The list may be associated with the configuration of the execution condition (for example, Trigger Event Cfg). The number of changes NKSN of the PS cell may be a value common to all the candidate target PS cells. Therefore, regardless of which PS cell is changed, the number of changes of the PS cell may be counted.

The information of the counter value may include a list in which each of the plurality of counter values and the number of changes of the PS cell are associated with each other for each of the plurality of candidate target SNs. The number of changes NKSN may be a value configured dedicatedly for each candidate target SN. As the information of the counter value, for example, a list of a plurality of counter values for each candidate target SN may be arranged in parallel in the RRC reconfiguration information. Furthermore, as the information of the counter value, for example, each of a plurality of pieces of conditional reconfiguration information (condRRCReconfig) may include a list of a plurality of counter values for the target SN that manages the PS cell associated with the conditional reconfiguration information.

The information of the counter value may include the list in which each of the plurality of counter values and the number of changes of the PS cell are associated with each other for each of the plurality of candidate target PS cells. The number of changes NKSN of the PS cell may be a value configured dedicatedly for each candidate target PS cell.

The configuration information may include information ("condExecutionCond", "condExecutionCondSCG", and the like) that configures an execution condition that needs to be fulfilled to trigger execution of the conditional reconfiguration.

The controller 120 of the UE 100 applies the RRC reconfiguration complete message and stores the configuration information. Note that the UE 100 and the MN 200M may also be able to perform the same operation as step S14.

In step S104, the transmitter 111 of the UE 100 transmits the RRC reconfiguration complete message to the MN 200M. The receiver 212 of the MN 200M receives the RRC reconfiguration complete message from the UE 100. Note that the UE 100 and the MN 200M can perform the same operation as step S15. Thereafter, the MN 200M and each SN 200S can perform the same operation as in step S16.

In step S105, the controller 120 of the UE 100 measures a radio signal from each cell.

In step S106, the controller 120 of the UE 100 evaluates an execution condition based on the measurement result. Specifically, the controller 120 determines whether or not the execution condition (event) of the candidate target PS cell is fulfilled based on the measurement result. When the execution condition is fulfilled, the controller 120 of the UE 100 regards the target candidate cell associated with the fulfilled execution condition as a triggered cell. In a case where there is a plurality of triggered cells, the controller 120 selects one of the plurality of triggered cells for execution of conditional reconfiguration. In a case where the number of triggered cells is one, the controller 120 regards the cell as a cell selected for execution of conditional reconfiguration. The controller 120 initiates execution of the conditional reconfiguration for the selected cell and performs the following operation. In the present operation example, the controller 120 selects the cell C21 and initiates execution of the conditional reconfiguration.

In step S107, the controller 120 of the UE 100 applies conditional reconfiguration information of the selected cell. As a result, the controller 120 of the UE 100 applies RRC reconfiguration included in the conditional reconfiguration information of the selected cell.

In step S108, the controller 120 of the UE 100 updates a counter value. The controller 120 updates the counter value when the conditional reconfiguration is performed. In the present operation example, the controller 120 of the UE 100 updates the counter value before initiating a random access (RA) procedure by performing the conditional reconfiguration.

The controller 120 may update the counter value in response to the application of the conditional reconfiguration information of the selected cell. The controller 120 may update the counter value in response to application of the RRC reconfiguration (RRCReconfiguration) included in the conditional reconfiguration information of the selected cell. The controller 120 may update the counter value based on the number of changes NKSN in which the PS cell is changed from the source PS cell to the target PS cell by using the configuration information. The number of changes NKSN may be replaced with the number of times of application of RRC reconfiguration. The controller 120 can update the counter value using one of the following methods.

In a first method, the controller 120 may update a counter value by calculating the counter value. For example, the controller 120 may determine (calculate) the counter value by using the following formula. The controller 120 may regard the determined counter value (sk-Counter_Mob) as the updated counter value.

$$\text{sk-Counter\_Mob} = \text{sk-Counter\_ini} + \text{OffKSN} \times \text{NKSN}$$

The initial counter value (sk-Counter_ini) may be a value commonly configured for all the candidate target PS cells. Alternatively, an initial counter value may be a value configured dedicatedly for each candidate target PS cell. The initial counter value may be a value configured dedicatedly for each candidate target SN.

The offset value (OffKSN) may be a value based on the number of candidate target SNs configured by the configuration information. The offset value may be a value that increases according to the number of candidate target SNs. The offset value may be, for example, a value equal to or larger than the number of candidate target SNs configured by the configuration information. The controller 230 of the base station 200 may configure the number of candidate target SNs to the offset value. The controller 120 of the UE 100 may configure the number of candidate target SNs to the offset value. Note that the controller 120 may determine the number of candidate target SNs based on the number of pieces of conditional reconfiguration information. The controller 120 may determine the number of candidate target SNs based on the number of candidate target SNs included in the conditional reconfiguration information.

(a) When the number of changes NKSN is a value common to all candidate target PS cells:

When the RRC reconfiguration message is directly received from the MN 200M as in step S104, the controller 120 may configure the number of changes NKSN to 0. In a case where it is determined that the RRC reconfiguration included in the conditional reconfiguration information has been received as the execution condition is fulfilled, the controller 120 may increase the number of changes NKSN by 1. Therefore, the controller 120 counts the number of times of changing the PS cell by using the configuration information as the number of changes NKSN. The controller 120 may count the number of changes NKSN of the PS cell every time the PS cell is changed regardless of which PS cell is changed.
(b) When the number of changes NKSN is a value configured dedicatedly for each candidate target SN:
When the RRC reconfiguration message is directly received from the MN 200M, the controller 120 may reset the number of changes NKSN for all the candidate target SNs that have been configured in the UE 100 so far. The controller 120 may configure the number of changes NKSN for all the newly configured candidate target SNs based on the directly received RRC reconfiguration message, and configure each number of changes NKSN to 0. In a case where it is determined that the RRC reconfiguration included in the conditional reconfiguration information has been received as the execution condition is fulfilled, and it is determined that the target SN is different from the source SN (is inter-SN CPC), the controller 120 may increase the number of changes NKSN associated with the target SN by 1. Therefore, the controller 120 counts the number of changes NKSN dedicatedly for each candidate target secondary node.
(c) When the number of changes NKSN is a value configured dedicatedly for each candidate target PS cell:
When the RRC reconfiguration message is directly received from the MN 200M, the controller 120 may reset the number of changes NKSN for all the candidate target PS cells that have been configured in the UE 100 so far. The controller 120 may configure the number of changes NKSN for all the newly configured candidate target PS cells based on the directly received RRC reconfiguration message, and configure each number of changes NKSN to 0. In a case where it is determined that the RRC reconfiguration included in the conditional reconfiguration information has been received as the execution condition is fulfilled, the controller 120 may increase the number of changes NKSN associated with the target PS cell by 1. Therefore, the controller 120 counts the number of changes NKSN dedicatedly for each candidate target PS cell.

In a second method, the controller 120 updates a counter value based on a list in which each of the plurality of counter values and the number of changes NKSN are associated with each other. The controller 120 may set the counter value corresponding to the number of changes NKSN as the updated counter value. In this case, the controller 120 may count the number of changes NKSN of the PS cell every time the PS cell is changed regardless of which PS cell is changed.
In a third method, the controller 120 updates a counter value based on a list in which each of the plurality of counter values for the corresponding candidate target SN and the number of changes NKSN are associated with each other. In this case, the controller 120 configures the number of changes NKSN for each candidate target SN. The controller 120 may count the number of changes NKSN dedicatedly for each candidate target SN, and may set a counter value corresponding to the number of changes NKSN associated with the target SN among the plurality of counter values as the updated counter value. In this case, the controller 120 may count the number of changes NKSN dedicatedly for each candidate target secondary node.
In a fourth method, the controller 120 updates the counter value based on the list in which each of the plurality of counter values for the corresponding candidate target PS cell and the number of changes NKSN are associated with each other. In this case, the controller 120 configures the number of changes NKSN for each candidate target PS cell. The controller 120 may count the number of changes NKSN dedicatedly for each candidate target PS cell, and may set a counter value corresponding to the number of changes NKSN associated with the target PS among the plurality of counter values as the updated counter value. In this case, the controller 120 may count the number of changes NKSN dedicatedly for each candidate target PS cell.
In a case where the target SN is associated with both the source PS cell and the target PS cell, the controller 120 may skip updating the counter value. That is, when performing the PS cell change (intra-SN CPC) in the same SN 200S, the controller 230 may skip updating the counter value.
The controller 120 may determine whether or not the target SN is associated with both the source PS cell and the target PS cell (is intra-SN CPC) based on configuration information (for example, information included in SpCellConfig) currently configured in the UE 100 and information (for example, MeasObject and/or RRCReconfiguration) included in the conditional reconfiguration information of the selected cell. The controller 120 may compare the configuration information currently configured in the UE 100 with the information included in the conditional reconfiguration information of the selected cell, and determine that the target SN is associated with both the source PS cell and the target PS cell when information about the source PS cell and the target PS cell is the same. Otherwise, the controller 120 may determine that the target SN is not associated with both the source PS cell and the target PS cell.
Further, the controller 120 of the UE 100 may derive (update) a security key based on the updated counter value. The controller 120 may derive an RRC key and a UP key by using the derived security key.
In step S109, the transmitter 111 of the UE 100 transmits an RRC reconfiguration complete message to the MN 200M. The receiver 212 of the MN 200M receives the RRC reconfiguration complete message from the UE 100.
The controller 120 of the UE 100 may include, in the RRC reconfiguration complete message, specific information for specifying the security key derived based on the updated counter value. Thus, the transmitter 111 transmits the specific information to the network 10.

The controller 120 may include the specific information in a message (for example, an SN RRC reconfiguration complete message to be described later) transmitted to the target SN through the MN 200M. The controller 120 may include the message in the RRC reconfiguration complete message. As a result, the transmitter 111 can transmit the specific information to the network 10 by the message transmitted to the target SN through the MN 200M.

The controller 120 may include the specific information in a message terminating at the MN 200M. The specific information may be included in a field other than the message transmitted to the target SN through the MN 200M included in the RRC reconfiguration complete message. As a result, the transmitter 111 can transmit the specific information to the network 10 by the message terminating at the MN 200M.

The specific information may include the updated security key. The specific information may include the updated counter value. The specific information may include calculation information used to calculate the updated counter value. The calculation information may include, for example, the number of changes NKSN of the PS cell used to calculate the updated counter value.

When the specific information is included in a field other than the SN RRC reconfiguration complete message in the RRC reconfiguration complete message, the controller 230 of the MN 200M can acquire the specific information. On the other hand, when the specific information is included in the SN RRC reconfiguration complete message in the RRC reconfiguration complete message, the controller 230 of the MN 200M does not acquire the specific information.

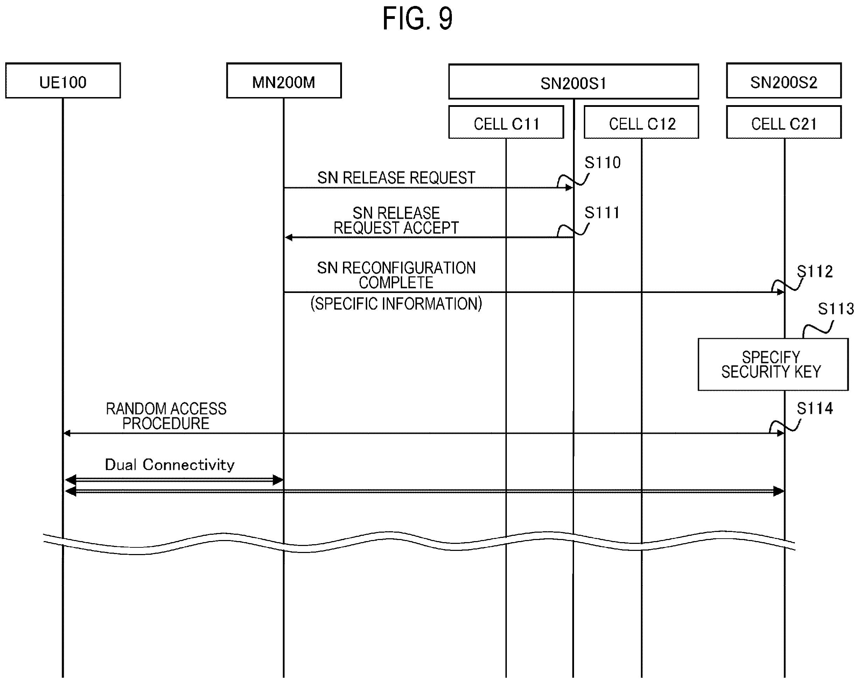

As illustrated in Fig. 9, in step S110, the NW communicator 220 of the MN 200M may transmit an SN release request message to the SN 200S1. The NW communicator 220 of the SN 200S1 may receive the SN release request message from the MN 200M. As a result, the MN 200M notifies the SN 200S1, which is the source SN, to stop providing user data.

In step S111, the NW communicator 220 of the SN 200S1 may transmit an SN release request accept message to the MN 200M. The NW communicator 220 of the MN 200M may receive the SN release request message from the SN 200S1.

In step S112, the NW communicator 220 of the MN 200M transmits an SN reconfiguration complete message to the SN 200S2. The NW communicator 220 of the SN 200S2 receives the SN reconfiguration complete message from the MN 200M. As a result, the MN 200M notifies the SN 200S2 of the PS cell selected by the UE 100.

The controller 230 of the MN 200M may include the SN RRC reconfiguration complete message including the specific information in the SN reconfiguration complete message. Accordingly, the NW communicator 220 of the MN 200M transmits the SN RRC reconfiguration complete message including the specific information to the SN 200S2. Alternatively, the controller 230 of the MN 200M may include the specific information in the SN reconfiguration complete message together with the SN RRC reconfiguration complete message. Accordingly, when the specific information includes a security key, the NW communicator 220 of the MN 200M transmits the security key to the SN 200S2. The controller 230 of the MN 200M may include information for calculating the security key in the SN reconfiguration complete message.

In step S113, the controller 230 of the SN 200S2 specifies the security key. In the present operation example, the controller 230 specifies a security key based on the specific information.

When the specific information includes the security key, the controller 230 may specify the security key included in the specific information as the security key used for protecting communication with the UE 100.

The controller 230 may derive the security key based on the information for calculating the security key and the specific information. The controller 230 may specify the derived security key as a security key used for protecting communication with the UE 100.

The controller 230 can derive an RRC key and a UP key used between the UE 100 and the SN 200S2 based on the specified security key. Note that the MN 200M and the SN 200S2 may also be able to perform the same operation as step S16.

In step S114, the UE 100 and the SN 200S2 perform a random access procedure. Thereafter, the UE 100 communicates with the MCG and the cell C21 in the DC.

Note that the controller 230 of the UE 100 may update the counter value at a timing other than step S108. For example, after initiating an RA procedure for the cell C21 by performing a conditional reconfiguration, the controller 230 may update the counter value before transmitting an RRC message to the cell C21 in the RA procedure. The RRC message here is, for example, a message 3.

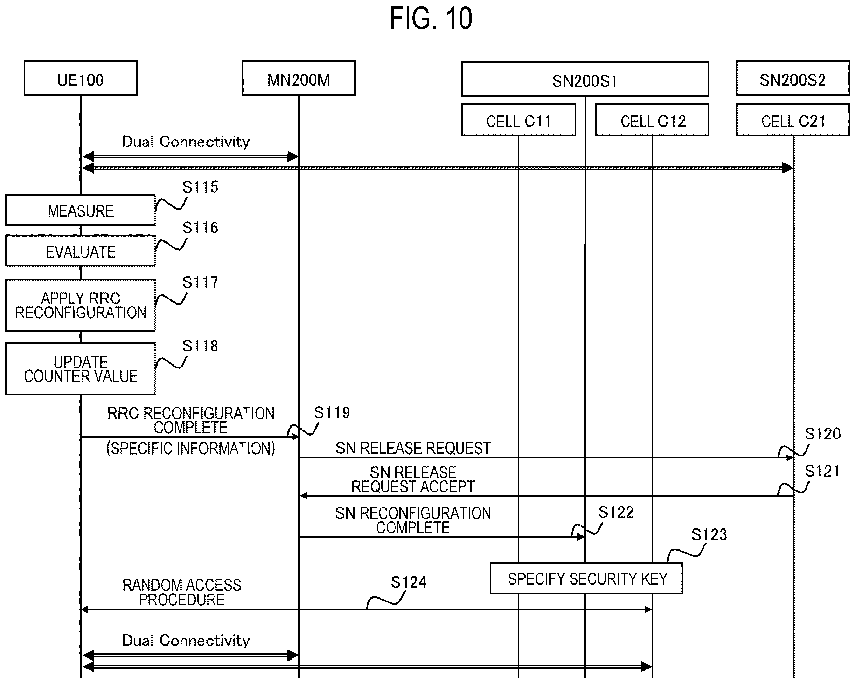

As illustrated in Fig. 10, steps S115 to S119 are steps S105 to S109. In the present operation example, the controller 120 of the UE 100 selects the cell C12 as the PS cell.

In step S120, similarly to step S110, the NW communicator 220 of the MN 200M transmits an SN release request message to the SN 200S2. In step S121, similarly to step S111, the NW communicator 220 of the SN 200S2 transmits an SN release request accept message to the MN 200M.

In step S122, similarly to step S112, the NW communicator 220 of the MN 200M transmits an SN reconfiguration complete message to the SN 200S1. In step S123, as in step S113, the controller 230 of the SN 200S1 specifies a security key. In step S124, similarly to step S114, the UE 100 and the SN 200S1 perform an RA procedure. Thereafter, the UE 100 communicates with the MCG and the cell C12 in the DC.

As described above, in the present operation example, the receiver 112 of the UE 100 receives, from the MN 200M, configuration information used to configure, in the UE 100, a plurality of conditional reconfigurations for configuring a plurality of candidate target PS cells. The controller 120 performs a conditional reconfiguration on a cell fulfilling an execution condition among the plurality of candidate target PS cells. The configuration information includes information of a counter value used to derive a security key of a target SN associated with a cell that performs a conditional reconfiguration. The controller 120 updates the counter value when the conditional reconfiguration is performed. As a result, even in a case where the PS cell is changed to a specific cell, communication between the UE 100 and the SN 200S can be appropriately protected since communication protection is achieved by using a different security key. In addition, the controller 120 updates the counter value when the conditional reconfiguration is performed, that is, before changing the PS cell. Therefore, since the UE 100 updates the counter value before the security key is used for communication protection, communication between the UE 100 and the SN 200S can be appropriately protected.

Furthermore, the controller 120 may update the counter value before initiating the RA procedure to the cell by performing a conditional reconfiguration. As a result, the UE 100 does not need to update the counter value in the RA procedure, and can perform the RA procedure and the subsequent communication while appropriately protecting the communication between the UE 100 and the SN 200S.

In addition, after initiating the RA procedure to the cell by performing the conditional reconfiguration, the controller 120 updates the counter value before transmitting the RRC message to the cell in the RA procedure. As a result, the counter value can be updated before communication protection is initiated by using a key derived based on the security key, and the RA procedure and subsequent communication can be performed while appropriately protecting the communication between the UE 100 and the SN 200S.

In addition, the controller 120 may update the counter value based on the number of changes NKSN in which the PS cell is changed from the source PS cell to the target PS cell by using the configuration information. Since the number of changes NKSN changes every time the PS cell is changed, it is possible to avoid deriving the security key by using the same counter value.

In addition, the controller 120 may count the number of times of changing the PS cell by using the configuration information as the number of changes. As a result, it is possible to avoid the UE 100 from dedicatedly storing the number of changes for each PS cell, for example, and it is possible to reduce the processing load.

In addition, the controller 120 may count the number of changes dedicatedly for each candidate target SN 200S. As a result, it is possible to avoid the UE 100 from dedicatedly storing the number of changes for each PS cell, for example, and it is possible to reduce the processing load. In addition, in a case where the PS cell is changed in the SN 200S, the counter value is not changed, and it is possible to suppress an unnecessary increase in the counter value (and overhead associated therewith).

In addition, the controller 120 may count the number of changes dedicatedly for each candidate target PS cell. As a result, since the number of changes NKSN changes every time the PS cell is changed, it is possible to avoid deriving the same security key even when other items for calculating the counter value are the same.

Further, the receiver 112 may receive an initial counter value and an offset value used for updating the counter value from the MN 200M as information of the counter value. As a result, by appropriately changing the initial counter value and the offset value, the counter value can be changed without significantly changing the existing system conforming to the 3GPP technical specification in which the SN counter (sk-Counter) is configured for each SN 200S. As a result, even when the PS cell is changed to a specific cell, communication between the UE 100 and the SN 200S can be appropriately protected because communication protection is achieved by using a different security key.

In addition, the initial counter value may be a value configured dedicatedly for each candidate target PS cell. As a result, the MN 200M can flexibly control the counter value.

In addition, the initial counter value may be a value commonly configured for all the candidate target PS cells. As a result, the UE 100 does not need to hold a plurality of initial counter values or select a corresponding initial counter value from among the plurality of initial counter values regardless of the number of candidate target PS cells, and the processing load can be reduced.

In addition, the offset value may be a value based on the number of candidate target SNs 200S configured by the configuration information. As a result, even when the number of candidate target SNs 200S increases, the counter values calculated based on the offset value do not overlap, and thus, it is possible to avoid deriving the security key by using the same counter value.

Furthermore, the information of the counter value may include a list in which each of the plurality of counter values and the number of changes are associated with each other. The controller 120 may set the counter value corresponding to the number of changes NKSN as the updated counter value. As a result, the UE 100 does not need to calculate the counter value by using the formula, and the processing load can be reduced.

In addition, the information of the counter value may include a list in which each of the plurality of counter values and the number of changes are associated with each other for each of the plurality of candidate target PS cells. The controller 120 may count the number of changes dedicatedly for each candidate target PS cell. The controller 120 may set the counter value corresponding to the number of changes among the plurality of counter values for the corresponding candidate target PS cell as the updated counter value. As a result, the UE 100 does not need to calculate the counter value by using the formula, and the processing load can be reduced.

In addition, in a case where the target SN 200S is associated with the source PS cell and the target PS cell, the controller 120 may skip updating the counter value. Since the security key is allocated for each target SN 200S, when the PS cell is changed in the same target SN 200S, communication between the UE 100 and the SN 200S can be appropriately protected even when derivation of the security key is omitted. Therefore, it is possible to reduce the processing load of the UE 100 while appropriately protecting the communication.

In addition, in the present operation example, the receiver 112 of the UE 100 receives, from the MN 200M, configuration information used to configure, in the UE 100, a plurality of conditional reconfigurations for configuring a plurality of candidate target primary secondary (PS) cells. The controller 120 updates the counter value used to derive the security key of the target SN associated with the cell fulfilling the execution condition from among the plurality of candidate target PS cells. The transmitter 111 transmits, to the network 10, specific information for specifying the security key derived based on the updated counter value. As a result, the network 10 can grasp the security key derived based on the counter value updated by the UE 100, and the communication between the UE 100 and the SN 200S can be appropriately protected.

The transmitter 111 of the UE 100 may transmit specific information including the security key to the network 10. As a result, the network 10 can grasp the security key itself derived by the UE 100. The processing of calculating the security key can be omitted, and the processing load can be reduced.

In addition, the transmitter 111 may transmit specific information including the updated counter value to the network 10. The network 10 can grasp the security key derived by the UE 100 based on the updated counter value.

In addition, the transmitter 111 may transmit, to the network 10, specific information including calculation information used to calculate the updated counter value. As a result, the network 10 can grasp the security key derived by the UE 100 based on the calculation information.

Further, the transmitter 111 may transmit specific information to the network 10 by a message transmitted to the target SN 200S through the MN 200M. This allows the UE 100 to directly transmit to the target SN 200S. The target SN 200S can specify the security key by the specific information.

Further, the transmitter 111 may transmit specific information to the network 10 by a message terminating at the MN 200M. This allows the UE 100 to transmit to the MN 200M. The MN 200M can grasp the specific information.

In addition, in the present operation example, in the base station 200 operating as the MN 200M, the transmitter 211 transmits, to the UE 100, configuration information used to configure, in the communication apparatus, a plurality of conditional reconfigurations for configuring a plurality of candidate target primary secondary (PS) cells. The receiver 212 receives, from the UE 100 that has updated the counter value used to derive a security key of a target secondary node associated with the cell fulfilling the execution condition from among the plurality of candidate target PS cells, the specific information for specifying the security key derived based on the updated counter value. In addition, in the base station 200 operating as the SN 200S, the receiver 212 receives, from the UE 100 that has updated the counter value used to derive the security key of the target SN associated with the cell fulfilling the execution condition from among the plurality of candidate target PS cells via the MN 200M that transmits, to the UE 100, the configuration information used to configure, in the communication apparatus, the plurality of conditional reconfigurations for configuring the plurality of candidate target primary secondary (PS) cells, specific information for specifying the security key derived based on the updated counter value. Since the MN 200M or the SN 200S that has received the specific information from the MN 200M can grasp the security key derived based on the counter value updated by the UE 100, so that the communication between the UE 100 and the SN 200S can be appropriately protected.

In addition, the receiver 212 may receive a message that is transmitted to the target secondary node through the master node and includes the specific information. The NW communicator 220 may transmit the message to the target SN 200S. As a result, the target SN 200S can specify the security key by the specific information.

The specific information may include a security key. The receiver 212 may receive the specific information by a message terminating at the MN 200M. The NW communicator 220 may transmit the security key to the target secondary node. As a result, the controller 230 can grasp the security key itself derived by the UE 100. The processing of calculating the security key can be omitted, and the processing load can be reduced.

(Second Operation Example)

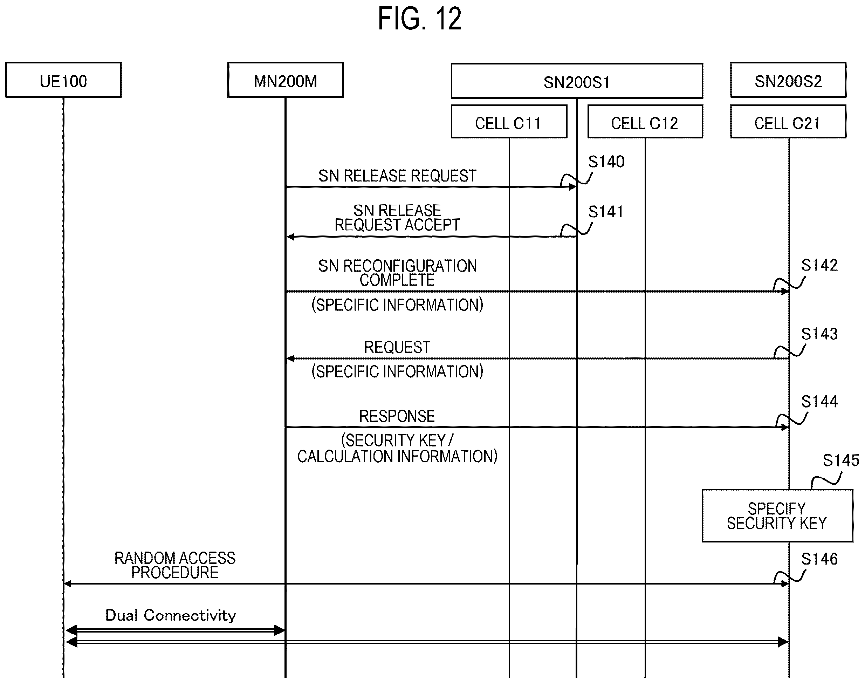

A second operation example of the mobile communication system 1 according to the embodiment will be described with reference to Fig. 12. In this operation example, the SN 200S2 requests the MN 200M for a security key or information for calculating the security key. Description of parts similar to those in the first operation example will be omitted.

Steps S140 to S142 are similar to steps S110 to S112. In this operation example, the controller 120 of the UE 100 may include specific information in a message (for example, an SN RRC reconfiguration complete message) transmitted to a target SN through the MN 200M.

The controller 230 of the SN 200S2 may perform the following operation when (the specific information included in) an SN reconfiguration complete message does not include the security key.

In step S143, the NW communicator 220 of the SN 200S2 transmits a request message for requesting a security key or information for calculating the security key to the MN 200M. The NW communicator 220 of the MN 200M receives the request message from the SN 200S2.

The request message may include specific information. As a result, the NW communicator 220 of the MN 200M receives the specific information from the SN 200S2. Note that the request message may be an existing message or a new message.

In step S144, the NW communicator 220 of the MN 200M transmits a response message to the request message to the SN 200S2. The NW communicator 220 of the SN 200S2 receives the response message from the MN 200M.

Similarly to step S113, the controller 230 of the MN 200M may derive the security key based on the specific information. The controller 230 may include the derived security key in the response message. Alternatively, the controller 230 may specify calculation information for calculating (deriving) the security key from the specific information based on the specific information. The controller 230 may include the calculation information in the response message.

In step S145, as in step S113, the controller 230 of the SN 200S2 specifies a security key. The controller 230 specifies a security key based on the security key or the calculation information included in the response message.

The controller 230 may specify the security key included in the response message as a security key used for protecting communication with the UE 100. Alternatively, the controller 230 may derive the security key based on the calculation information and the specific information included in the response message. The controller 230 may specify the derived security key as a security key used for protecting communication with the UE 100.

Step S146 is similar to step S114.

As described above, the NW communicator 220 of the MN 200M may receive the specific information from the SN 200S2. The NW communicator 220 may transmit the security key or information for calculating the security key to the SN 200S2.

(Third Operation Example)

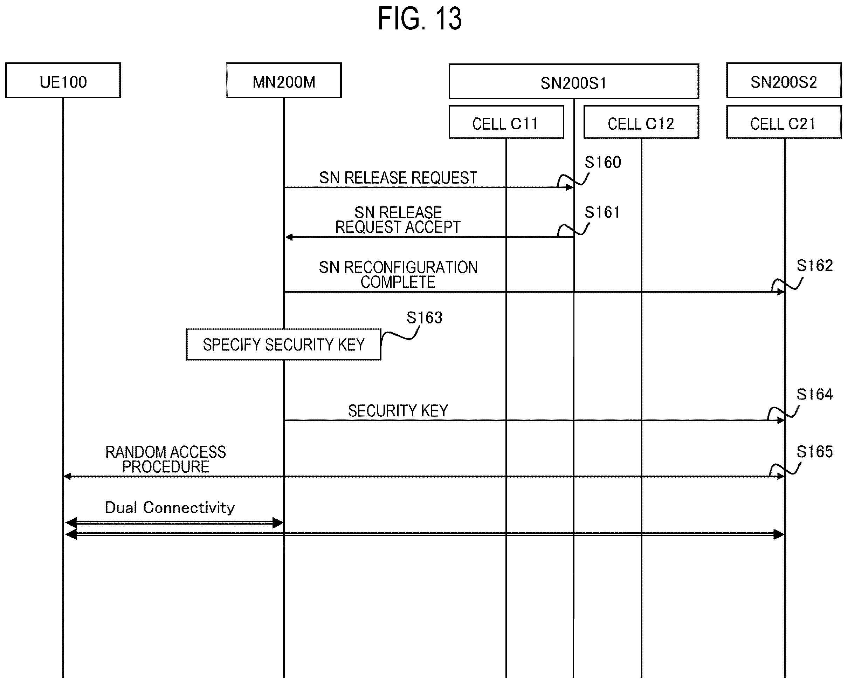

A third operation example of the mobile communication system 1 according to the embodiment will be described with reference to Fig. 13. In this operation example, the MN 200M specifies a security key. The description of parts similar to those in each of the above-described operation examples will be omitted.

Steps S160 to S162 are similar to steps S110 to S112. In the present operation example, the controller 120 of the UE 100 may include specific information in a message (for example, a field other than the SN RRC reconfiguration complete message in the RRC reconfiguration complete message) terminating at the MN 200M. The specific information may include the updated counter value or calculation information used to calculate the updated counter value.

In step S163, as in step S113, the controller 230 of the MN 200M specifies a security key based on the specific information. The controller 230 may calculate the updated counter value based on the calculation information. The controller 230 derives the security key based on the updated counter value.

In step S164, the NW communicator 220 of the MN 200M transmits the security key to the SN 200S2. The NW communicator 220 of the MN 200M can transmit the security key to the SN 200S2 by an existing message or a new message. The NW communicator 220 of the SN 200S2 receives the security key from the MN 200M. The security key is a security key included in the specific information or a security key derived by the controller 230.

Step S165 is similar to step S114.

As described above, the specific information may include the updated counter value or the calculation information used to calculate the updated counter value. The controller 230 may derive the security key based on the updated counter value. The NW communicator 220 may transmit the security key derived by the controller 230 to the SN 200S2. As a result, similarly to the existing operation, it is possible to avoid that the MN 200M derives the security key and the SN200S2 derives the security key. The influence on the SN 200S2 can be reduced.

[Other Embodiments]

In the above-described embodiment, the processing of steps S 110 and S111 (and steps similar thereto) may be omitted. For example, the controller 230 of the MN 200M may stop (skip) the transmission of the SN release request message when the selective SCG activation is performed. When it is the transmission of the SN release request message for the UE 100 configured with respect to the configuration of the selective SCG activation (for example, a plurality of conditional reconfigurations), the controller 230 of the MN 200M may stop (skip) the transmission of the message. Further, the controller 230 of the MN 200M may stop (skip) the transmission of the SN release request message based on, for example, the specific information received from the UE 100.

In the third operation example of the above-described embodiment, the processing of step S 163 may be performed before the processing of step S 162 is performed. In this case, the controller 230 of the MN 200M may include the specified security key in the SN reconfiguration complete message. In step S162, the NW communicator 220 of the MN 200M may transmit the security key to the SN 200S2 by the SN reconfiguration complete message. In this case, the processing of step S164 may be omitted.

In the above-described embodiment, a case where the RA procedure is successful is described as an example. When the RA procedure fails, the transmitter 111 of the UE 100 may transmit failure information indicating the failure of the RA procedure to the MN 200M. The transmitter 211 of the MN 200M may transmit the configuration information for configuring the counter value to the UE 100 based on the reception of the failure information. The MN 200M may transmit, to the UE 100, configuration information used to configure, in the UE 100, a plurality of conditional reconfigurations, for example, as in step S103. The controller 120 of the UE 100 may discard the configuration information stored for the selective SCG activation and perform the selective SCG activation based on the configuration information.

The operation sequence (and the operation flow) in the above-described embodiment may not necessarily be performed in time series according to the order described in the flowchart or the sequence diagram. For example, the steps in the operation may be performed in an order different from the order described in the flowchart or the sequence diagram, or may be performed in parallel. In addition, some of the steps in the operation may be removed or additional steps may be added to the processing. In addition, the operation sequence (and the operation flow) in the above-described embodiment may be performed separately and independently, or may be performed by combining two or more operation sequences (and operation flows). For example, some steps of one operation flow may be added to other operation flows, or some steps of one operation flow may be replaced with some steps of other operation flows.

In the above-described embodiments, the mobile communication system based on the NR is described as the example of the mobile communication system 1. However, the mobile communication system 1 is not limited to this example. The mobile communication system 1 may be a system conforming to a TS of long term evolution (LTE) or another generation system (for example, the 6th generation) of the 3GPP standard. The base station 200 may be an eNB that provides E-UTRA user plane and control plane protocol terminations toward the UE 100 in LTE. The mobile communication system 1 may be a system conforming to a TS defined in a standard other than the 3GPP standard. The base station 200 may be an integrated access and backhaul (IAB) donor or an IAB node.

A program for causing a computer to execute each processing to be performed by the UE 100 or the base station 200 may be provided. The program may be recorded in a computer readable medium. By using the computer readable medium, the program can be installed in the computer. Here, the computer readable medium in which the program is recorded may be a non-transitory recording medium. The non-transitory recording medium is not particularly limited, and may be, for example, a recording medium such as a compact disk read only memory (CD-ROM) or a digital versatile disc read only memory (DVD-ROM). Furthermore, a circuit that performs each processing to be performed by the UE 100 or the base station 200 may be integrated, and at least a part of the UE 100 or the base station 200 may be configured as a semiconductor integrated circuit (a chipset or a system on chip (SoC)).

In the above-described embodiment, the term "transmit" may mean performing processing of at least one layer in a protocol stack used for transmission, or may mean physically transmitting a signal in a wireless or wired manner. Alternatively, the term "transmit" may mean a combination of performing processing of at least one layer in a protocol stack used for transmission and physically transmitting a signal in a wireless or wired manner described above. Similarly, the term "receive" may mean performing processing of at least one layer in a protocol stack used for reception, or may mean physically receiving a signal in a wireless or wired manner. Alternatively, the term "receive" may mean a combination of performing processing of at least one layer in a protocol stack used for reception and physically receiving a signal in a wireless or wired manner described above. Similarly, the term "obtain/acquire" may mean obtaining/acquiring information from stored information, may mean obtaining/acquiring information from information received from another node, or may mean obtaining/acquiring information by generating the information. Similarly, the terms "based on" and "depending on/in response to" do not mean "only based on" or "only depending on/only in response to" unless explicitly stated otherwise. The term "based on" means both "only based on" and "at least partially based on". Similarly, the term "depending on/in response to" means both "only depending on/in response to" and "at least partially depending on/in response to". Similarly, the terms "include" and "comprise" do not mean including only enumerated items, but mean both including only enumerated items and including additional items in addition to the enumerated items. Similarly, in the present disclosure, the "or" does not mean exclusive OR but means OR. Moreover, any reference to elements using designations such as "first", "second", and the like used in the present disclosure does not generally limit the amount or order of those elements. These designations may be used in the present disclosure as a convenient method to distinguish between two or more elements. References to first and second elements do not mean that only two elements can be employed therein or that the first element should precede the second element in any form. In the present disclosure, when articles such as a, an, and the in English are added by translation, these articles cover the plural meaning unless the context clearly indicates otherwise.

Although the present disclosure has been described in accordance with examples, it is understood that the present disclosure is not limited to the examples or structures. The present disclosure also covers various modified examples or modifications made within an equivalent range. In addition, various combinations or modes, or other combinations or modes including only one element, more elements, or less elements also fall within the scope and spirit of the present disclosure.

(Supplementary Notes)

Features related to the above-described embodiment are additionally described.

(Supplementary Note 1)

A communication apparatus that performs communication with a master cell group associated with a master node and a secondary cell group associated with a secondary node, the communication apparatus comprising:

a receiver (121) configured to receive configuration information from the master node, the configuration information being used to configure, in the communication apparatus, a plurality of conditional reconfigurations for configuring a plurality of candidate target primary secondary (PS) cells; and
a controller (120) configured to perform a conditional reconfiguration for a cell fulfilling an execution condition among the plurality of candidate target PS cells, wherein
the configuration information includes information of a counter value used to derive a security key of a target secondary node associated with the cell, and
the controller updates the counter value when the conditional reconfiguration is performed.

(Supplementary Note 2)

The communication apparatus according to supplementary note 1, wherein
the controller updates the counter value before initiating a random access procedure to the cell by performing the conditional reconfiguration.

(Supplementary Note 3)

The communication apparatus according to supplementary note 1, wherein
the controller updates the counter value after initiating a random access procedure to the cell by performing the conditional reconfiguration and before transmitting a radio access control (RRC) message to the cell in the random access procedure.

(Supplementary Note 4)

The communication apparatus according to any one of the supplementary notes 1 to 3, wherein
the controller updates the counter value based on a number of changes in which a PS cell is changed from a source PS cell to a target PS cell by using the configuration information.

(Supplementary Note 5)

The communication apparatus according to supplementary note 4, wherein
the controller counts the number of times of changing the PS cell by using the configuration information as the number of changes.

(Supplementary Note 6)

The communication apparatus according to supplementary note 4, wherein
the controller counts the number of changes dedicatedly for each candidate target secondary node.

(Supplementary Note 7)

The communication apparatus according to supplementary note 4, wherein
the controller counts the number of changes dedicatedly for each candidate target PS cell.

(Supplementary Note 8)

The communication apparatus according to any one of the supplementary notes 1 to 7, wherein the receiver receives an initial counter value and an offset value used for updating the counter value from the MN as information of the counter value.

(Supplementary Note 9)

The communication apparatus according to supplementary note 8, wherein the initial counter value is a value configured dedicatedly for each the candidate target PS cell.

(Supplementary Note 10)

The communication apparatus according to supplementary note 8, wherein the initial counter value is a value commonly configured for all the candidate target PS cells.

(Supplementary Note 11)

The communication apparatus according to any one of the supplementary notes 8 to 10, wherein the offset value is a value based on the number of candidate target secondary nodes configured by the configuration information.

(Supplementary Note 12)

The communication apparatus according to any one of the supplementary notes 4 to 11, wherein

the information of the counter value includes a list in which each of the plurality of counter values and the number of changes are associated with each other, and
the controller sets the counter value corresponding to the number of changes as the updated counter value.

(Supplementary Note 13)

The communication apparatus according to any one of the supplementary notes 4 to 11, wherein the information of the counter value may include a list in which each of the plurality of counter values and the number of changes are associated with each other for each of the plurality of the candidate target PS cells, and
The controller

counts the number of changes dedicatedly for each candidate target PS cell, and
sets the counter value corresponding to the number of changes among the plurality of counter values for the corresponding candidate target PS cell as the updated counter value.

(Supplementary Note 14)

The communication apparatus according to any one of the supplementary notes 1 to 13, wherein in a case where the target secondary node is associated with the source PS cell and the target PS cell, the controller skips updating the counter value.

(Supplementary Note 15)

A communication method performed in a communication apparatus that performs communication with a master cell group associated with a master node and a secondary cell group associated with a secondary node, the communication method comprising the steps of:

receiving configuration information from the master node, the configuration information being used to configure, in the communication apparatus, a plurality of conditional reconfigurations for configuring a plurality of candidate target primary secondary (PS) cells; and
performing a conditional reconfiguration for a cell fulfilling an execution condition among the plurality of candidate target PS cells, wherein

the configuration information includes information of a counter value used to derive a security key of a target secondary node associated with the cell, and
the communication method further comprises a step of updating the counter value when the conditional reconfiguration is performed.

(Supplementary Note 16)

A communication apparatus (100) that performs communication with a master cell group associated with a master node (MN 200M) and a secondary cell group associated with a secondary node (SN 200S), the communication apparatus comprising:

a receiver (121) configured to receive configuration information from the master node, the configuration information being used to configure, in the communication apparatus, a plurality of conditional reconfigurations for configuring a plurality of candidate cells; and
a controller (120) configured to perform a conditional reconfiguration for a cell fulfilling an execution condition among the plurality of candidate cells, wherein
the configuration information includes information of a counter value used to derive a security key of a secondary node associated with the cell, and
the controller updates the counter value when the conditional reconfiguration is performed.

(Supplementary Note 17)

The communication apparatus according to supplementary note 16, wherein
the controller updates the counter value before initiating a random access procedure to the cell by performing the conditional reconfiguration.

(Supplementary Note 18)

The communication apparatus according to supplementary note 16 or 17, wherein
the controller updates the counter value after initiating a random access procedure to the cell by performing the conditional reconfiguration and before transmitting a radio access control (RRC) message to the cell in the random access procedure.

(Supplementary Note 19)

The communication apparatus according to any one of supplementary notes 16 to 18, wherein
the information of the counter value includes a list of a plurality of counter values.

(Supplementary Note 20)

The communication apparatus according to any one of supplementary notes 16 to 19, wherein
the controller skips updating the counter value when the secondary node is associated with a source PS cell and a target PS cell.

(Supplementary Note 21)

A communication method performed in a communication apparatus (100) that performs communication with a master cell group associated with a master node (MN 200M) and a secondary cell group associated with a secondary node (SN 200S), the communication method comprising the steps of:

receiving configuration information from the master node, the configuration information being used to configure, in the communication apparatus, a plurality of conditional reconfigurations for configuring a plurality of candidate cells; and
performing a conditional reconfiguration for a cell fulfilling an execution condition among the plurality of candidate cells, wherein
the configuration information includes information of a counter value used to derive a security key of a target secondary node associated with the cell, and
the communication method further comprises a step of updating the counter value when the conditional reconfiguration is performed.

(Supplementary Note 22)

The communication method according to supplementary note 21, wherein
in the step of updating, the counter value is updated before initiating a random access procedure to the cell by performing the conditional reconfiguration.

(Supplementary Note 23)

The communication method according to supplementary note 21 or 22, wherein
in the step of updating, the counter value is updated after initiating a random access procedure to the cell by performing the conditional reconfiguration and before transmitting a radio access control (RRC) message to the cell in the random access procedure.

**Claims**

1. A communication apparatus (100) that performs communication with a master cell group associated with a master node (MN 200M) and a secondary cell group associated with a secondary node (SN 200S), the communication apparatus comprising:

   a receiver (121) configured to receive configuration information from the master node, the configuration information being used to configure, in the communication apparatus, a plurality of conditional reconfigurations for configuring a plurality of candidate cells; and
   a controller (120) configured to perform a conditional reconfiguration for a cell fulfilling an execution condition among the plurality of candidate cells, wherein
   the configuration information includes information of a counter value used to derive a security key of a secondary node associated with the cell, and
   the controller updates the counter value when the conditional reconfiguration is performed.

2. The communication apparatus according to claim 1, wherein
   the controller updates the counter value before initiating a random access procedure to the cell by performing the conditional reconfiguration.

3. The communication apparatus according to claim 1, wherein
   the controller updates the counter value after initiating a random access procedure to the cell by performing the conditional reconfiguration and before transmitting a radio access control (RRC) message to the cell in the random access procedure.

4. The communication apparatus according to any one of claims 1 to 3, wherein
   the information of the counter value includes a list of a plurality of counter values.

5. The communication apparatus according to any one of claims 1 to 3, wherein
   the controller skips updating the counter value when the secondary node is associated with a source PS cell and a target PS cell.

6. A communication method performed in a communication apparatus (100) that performs communication with a master cell group associated with a master node (MN 200M) and a secondary cell group associated with a secondary node (SN 200S), the communication method comprising the steps of:

   receiving configuration information from the master node, the configuration information being used to configure, in the communication apparatus, a plurality of conditional reconfigurations for configuring a plurality of candidate cells; and
   performing a conditional reconfiguration for a cell fulfilling an execution condition among the plurality of candidate cells, wherein
   the configuration information includes information of a counter value used to derive a security key of a target secondary node associated with the cell, and
   the communication method further comprises a step of updating the counter value when the conditional reconfiguration is performed.

7.  The communication method according to claim 6, wherein
    in the step of updating, the counter value is updated before initiating a random access procedure to the cell by performing the conditional reconfiguration.

8.  The communication method according to claim 6, wherein
    in the step of updating, the counter value is updated after initiating a random access procedure to the cell by performing the conditional reconfiguration and before transmitting a radio access control (RRC) message to the cell in the random access procedure.

# FIG. 1

EP 4 661 460 A1

# FIG. 2

EP 4 661 460 A1

FIG. 3

# FIG. 4

UE100        MN200M        SN200S

ESTABLISH RRC CONNECTION — S11

SN ADDITION / CHANGE REQUEST — S12

SN ADDITION / CHANGE REQUEST ACCEPT — S13

RRC RECONFIGURATION (SN COUNTER) — S14

RRC RECONFIGURATION COMPLETE — S15

SN RECONFIGURATION COMPLETE — S16

RANDOM ACCESS PROCEDURE — S17

Dual Connectivity

# FIG. 5

200M

MCG(PCell)

200S1

100

CELL C12

200S2

CELL C11

CELL C32

200S2

PATH A    PATH B

CELL C31

CELL C21

CELL C22

EP 4 661 460 A1

# FIG. 6

EP 4 661 460 A1

FIG. 7

# FIG. 8

EP 4 661 460 A1

# FIG. 9

| UE100 | MN200M | SN200S1 | | SN200S2 |
|---|---|---|---|---|
| | | CELL C11 | CELL C12 | CELL C21 |

SN RELEASE REQUEST — S110

SN RELEASE REQUEST ACCEPT — S111

SN RECONFIGURATION COMPLETE — S112
(SPECIFIC INFORMATION)

S113

SPECIFY SECURITY KEY

RANDOM ACCESS PROCEDURE — S114

Dual Connectivity

EP 4 661 460 A1

# FIG. 10

EP 4 661 460 A1

# FIG. 11

RRCReconfiguration
└─RRCReconfiguration-IEs
    └─conditionalReconfiguration-r16
        ├─condReconfigToAddModList-r16
            └─CondReconfigToAddMod-r16
                ├─condRRCReconfig-r16: RRCReconfiguration
                      ├─ sk-Counter_ini
                      └─ $Off_{SN}$      — E11
                      ...
        ...
  ...

---

RRCReconfiguration
└─RRCReconfiguration-IEs
    ├─ $Off_{SN}$     — E13
    └─conditionalReconfiguration-r16
        ├─condReconfigToAddModList-r16
            └─CondReconfigToAddMod-r16
                ├─condRRCReconfig-r16: RRCReconfiguration
                      └─ sk-Counter_ini      — E12
                      ...
        ...
  ...

EP 4 661 460 A1

# FIG. 12

# FIG. 13

```
UE100          MN200M              SN200S1                    SN200S2
                          | CELL C11 |  | CELL C12 |         | CELL C21 |

                      SN RELEASE REQUEST          S160
                  ──────────────────────────>

                      SN RELEASE           S161
                    REQUEST ACCEPT
                  <──────────────────────────

                   SN RECONFIGURATION                      S162
                       COMPLETE
                  ────────────────────────────────────────>

                                  S163
              | SPECIFY SECURITY KEY |

                      SECURITY KEY                          S164
                  ────────────────────────────────────────>

        RANDOM ACCESS                                       S165
         PROCEDURE
    <────────────────────────────────────────────────────>

    Dual Connectivity
    <════════════════════>
    <════════════════════════════════════════════════════>
```

EP 4 661 460 A1

## INTERNATIONAL SEARCH REPORT

| International application No. |
| --- |
| **PCT/JP2024/001747** |

**A.    CLASSIFICATION OF SUBJECT MATTER**

*H04W 12/041*(2021.01)i; *H04W 36/24*(2009.01)i
FI:    H04W12/041; H04W36/24

According to International Patent Classification (IPC) or to both national classification and IPC

**B.    FIELDS SEARCHED**

Minimum documentation searched (classification system followed by classification symbols)

H04W12/041; H04W36/24

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| Y | HUAWEI. HISILICON. NR-DC selective activation of SCG [online]. 3GPP TSG RAN WG2 #120. 18 November 2022, R2-2212070, [retrieval on 04 March 2024], internet:<URL: https://www.3gpp.org/ftp/tsg_ran/WG2_RL2/TSGR2_120/Docs/R2-2212070.zip> section 2.1.2 | 1, 4-6 |
| A | | 2-3, 7-8 |
| Y | WO 2022/084945 A1 (TELEFONAKTIEBOLAGET LM ERICSSON (PUBL)) 28 April 2022 (2022-04-28) paragraph [0124], fig. 4 | 1, 4-6 |
| A | | 2-3, 7-8 |
| Y | XIAOMI. Discussion on NR-DC with selective activation of the cell groups [online]. 3GPP TSG RAN WG2 #120. 18 November 2022, R2-2212655, [retrieval on 04 March 2024], internet:<URL: https://www.3gpp.org/ftp/tsg_ran/WG2_RL2/TSGR2_120/Docs/R2-2212655.zip> section 2.5 | 5 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **04 March 2024** | **19 March 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

International application No.

**PCT/JP2024/001747**

| Patent document cited in search report | Publication date (day/month/year) | Patent family member(s) | Publication date (day/month/year) |
|---|---|---|---|
| WO 2022/084945 A1 | 28 April 2022 | US 2023/0413124 A1 paragraph [0125], fig. 4 JP 2023-547867 A CN 116491160 A KR 10-2023-0093032 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023013372 A

**Non-patent literature cited in the description**

- Security architecture and procedures for 5G System. *3GPP TS 33.501 V17.8.0*